# EUROPEAN PATENT APPLICATION

(11) **EP 3 656 260 A1**
(43) Date of publication of application: **27.05.2020**
(21) Application number: 19020623.5
(22) Date of filing: 08.11.2019
(51) Int. Cl.: A47J 36/12, A47J 27/14

(54) **EQUIPMENT FOR THE THERMAL PREPARATION OF FOOD**

(30) Priority: 26.11.2018 CZ 20180649
(71) Applicant: Jipa CZ s.r.o., 50303 Smirice (CZ)
(72) Inventor: Pavlík, Jirí, 503 03 Smirice (CZ)
(74) Representative: Skoda, Milan

(57) **Abstract**

The equipment for thermal food preparation comprising a supporting frame (1) in which is pivotally mounted at least one cooking vessel (2), and in the supporting frame (1) is further pivotally mounted at least one lid (3) for tilting onto the cooking vessel (2) which comprises a drive (6) simultaneously connected to the cooking vessel (2) and the lid (3).

## Description

### Technical field

The invention relates to equipment for thermal food preparation comprising a supporting frame, in which at least one cooking vessel is pivotally mounted, and with the supporting frame having at least one hinged lid for tilting onto the cooking vessel.

### State of the Art

A whole range of design solutions for the industrial thermal preparation of food containing a cooking vessel have long been known.

From the utility model CZ 7970, a food processing boiler with a double-walled cooking vessel is known, which is self-supporting with a heat exchanger using drawing compensators formed by the cover of the lid and a shaft cover. This cooking vessel is not pivotable and contains only a manually-operated tilting lid.

In patent application CZ PV1989-2467 is described a device for thermal food preparation containing a cooking vessel with a base for cooking, a mixer fitted to contact with the vessel, a stand adapted for removing the container and a heater for heating the container. The inner surface of the bottom of the cooking vessel is shaped into a circular arc and above this the mixer is mounted, which is pivotally mounted in the axis of symmetry of the cooking vessel. The cookware is again not pivotable and again has only a manually-operated tilting lid.

From another utility model CN204839126 U a device for thermal food preparation is known which comprises a pivoting cooking vessel operated by means of manual rotation of a wheel located at the front of the device, where the wheel is connected to a rod transmission on which a cylindrical cooking vessel is mounted. No lid is placed onto the cooking vessel as an integral item.

From patent application CN107625413 A there is further known a device with a hand-operated pivoting cooking vessel, on which is located a lid, which is an integral part and which is manually openable, and the device includes a support mechanism to facilitate operation of the lid.

A device for food preparation with motorised pivoting of cooking vessels is known from patent application EP 2628419 A1. The cooking vessels here comprise a lid which is a manually-operated.

From patent document US 3534748 is known a cooking pan which comprises a single drive unit connected to a cooking vessel for controlling its movement. It is not apparent from the description that the above-mentioned drive also controls the movement of the lid. The lid remains in the same position during tilting and its lifting is then performed manually. This is a great disadvantage of this design solution because not only is manipulation of the lid physically demanding on staff but could be dangerous as there is a risk of injury to the operator from scalding by hot steam as well.

From current technology equipment for food preparation is also known which comprise a pivotable cooking vessel connected to a motor drive, whereon a hinged lid with a separate motor drive is mounted. The disadvantage is that the cooking vessel and the lid have independent drives with independent controls that are not user-friendly and safe from the operator's point of view and at the same time it means a relatively complicated design because both drives are usually mounted in a single place.

From the above-mentioned current technology, it is clear that the known devices have a number of disadvantages, while the greatest drawback seems to be that a simple design that allows simultaneous control of both the tilting of the cooking vessel and its lid does not exist.

The goal of the invention is the design of equipment for the thermal preparation of food which will have a relatively simple design and which at the same time will enable simple operation of both the tilting of the cooking vessel as well as the opening of the lid with which it is provided.

### Principle of the Invention

The above-mentioned disadvantages are largely removed, and the objectives of the invention are fulfilled by equipment for thermal food preparation comprising a supporting frame, in which at least one cooking vessel is pivotally mounted, and with the supporting frame having at least one hinged lid for tilting onto the cooking vessel, according to the invention it comprises a drive simultaneously connected to the cooking vessel and the lid. The advantage is a significant reduction in the number of components and the associated relatively inexpensive design, which allows safe operation of the tilting of the cooking vessel as well as the lid, while at the same time bringing a significant reduction in the installation space for the controls of the thermal preparation equipment.

It is to advantage if the lid is mounted on the first shaft on which a lid lever is also mounted, which is further connected to the drive, and the cooking vessel is mounted on a second shaft on which is simultaneously mounted the lever of the cooking vessel, which is also connected to said drive. The advantage is a very simple yet fully functional and very reliable design solution.

According to a first advantageous variant, a lid position lock is mounted on the lid lever, into which the lock pin engages in its extreme position. The advantage is simple mechanical assurance of alignment of the safe opening of the lid and the safe subsequent tilting of the cooking vessel.

In this case, it is to further advantage if the lid position lock is mounted at the connection of the lid lever and the drive. The advantage is that in terms of the distribution of power ratios and in terms of simplicity of construction this is the most advantageous.

It is also to advantage that the lock pin is mounted in the supporting frame. Again, this is the structurally simplest solution.

According to a second advantageous variant, a second pushing means is mounted on the cooking vessel lever and is simultaneously mounted on the supporting frame. The advantage is that the second pushing means ensures that the lid remains open when the cooking vessel returns from its tilted position to the working position.

It is to advantage if the second pushing means is simultaneously mounted on the pin of the lever of the cooking vessel and on the pin mounted in the support frame. From the construction point of view, this is again the simplest design.

It is to further advantage if the second pushing means is mounted to the cylinder with threads in the adjusting rod, which is simultaneously rotatably mounted in the pin of the cooking vessel lever. The advantage is that it is possible to precisely set the exact positions of the individual parts of the kinematic mechanism.

According to the second variant, it is to further advantage if the lid lever is provided with a stop plate against which the stop leans in its extreme position, which is adjustably fixed to the supporting frame. The advantage is the possibility to precisely set the exact positions of the lid.

In both variants, it is to advantage if the first pushing means is simultaneously mounted on the lid lever, which is further to advantage simultaneously rotatably and adjustably mounted in the supporting frame. The advantage is that the first pushing means allows the lid to be kept in a constantly open position while other parts of the whole mechanism are moved.

It is also to advantage if the drive is mounted on one end of the lid lever pin and the other end is mounted on the lever pin of the cooking vessel.

It is also to greatest advantage if the drive is a linear drive which is a linear motor. The advantage is that this is the most advantageously constructed and functionally designed solution.

It is also to great advantage if the equipment for the thermal preparation of food further comprises a lid lever position sensor and a cooking vessel lever position sensor. The sensors ensure the safe functioning of the whole mechanism.

The main advantage of the equipment for the thermal preparation of food according to the invention is that it allows easier and safer control and also substantially increases the possibilities of automating the entire process of controlling and cooking. Another great advantage is that the equipment is simpler, cheaper and yet better functioning than similar existing devices.

### Overview of the Figures

The invention will be more closely elucidated using drawings, in which Fig. 1 is a perspective view of the arrangement of a drive simultaneously connected to a cooking vessel and a lid according to the first design variant, Fig. 2 shows a frontal view of the arrangement of the individual parts of the drive on the equipment according to the first design variant when the cooking vessel is in the operating position with the lid closed, with the lock being unfastened, Fig. 3 shows a detailed frontal view of the lid control according to the first design variant when the cooking vessel is in the operating position with the lid closed, with the lock being unfastened, Fig. 4 shows a frontal view of the arrangement of the individual parts of the drive on the equipment according to the first design variant when the cooking vessel is in the operating position when the cooking vessel and the lid are tilted, the drive is fully retracted and the lock is fastened, Fig. 5 shows a detailed frontal view of the lid control according to the first design variant when the cooking vessel and lid are tilted, the drive is fully retracted and the lock is fastened, Fig. 6 shows a frontal view of the arrangement of the individual parts of the drive on the equipment according to the first design variant when the cooking vessel is in the operating position when the lid is tilted, the drive is partially retracted and the lock is unfastened, Fig. 7 shows a detailed frontal view of the lid control according to the first design variant when the cooking vessel is in the operating position and the lid is tilted, with the lid in the open position, the drive is partially retracted and the lock is unfastened, Fig. 8 shows a perspective view of the arrangement of the drive simultaneously connected to the cooking vessel and the lid according to the second design variant, Fig. 9 shows a frontal view of the arrangement of the individual parts of the drive on the equipment according to the second design variant Fig.10 shows a frontal view of the arrangement of the individual parts of the drive on the apparatus according to the second design variant when the cooking vessel is in the operating position with the lid closed , Fig. 11 shows a frontal view of the arrangement of the individual parts of the drive on the apparatus according to the second design variant when the cooking vessel is in the operating position with the lid in the open position, Fig. 12 shows a detailed frontal view of the operation of the cooking vessel according to the second design variant, Fig.13 shows in cross-section a detailed view of the placement of the second pushing means on the on the lever of the cooking vessel, and Fig. 14 is a perspective view of the entire equipment for thermal food preparation with two cooking vessels fit with two lids to tilt onto these cooking vessels.

### Examples of the Performance of the Invention

### Example 1

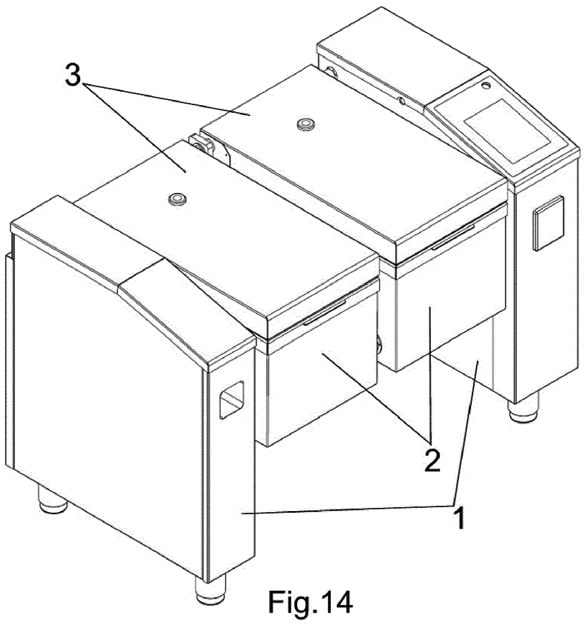

The equipment for thermal food preparation (Fig. 14) comprises a supporting frame 1, in which are pivotally mounted two cooking vessels 2, and in the supporting frame 1 are a further pivotally mounted two lids 3 to be tilted onto the cooking vessels 2.

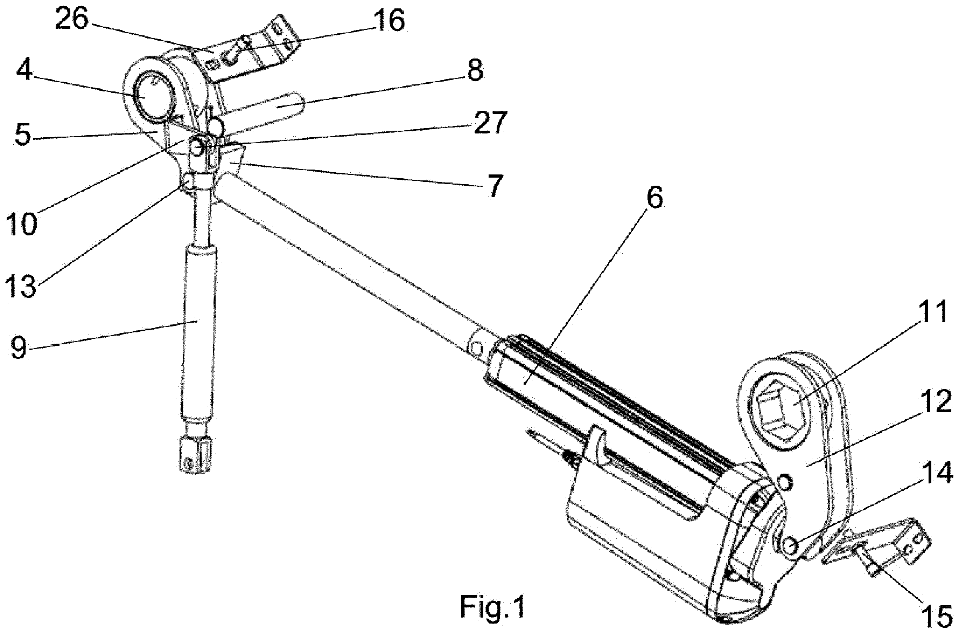

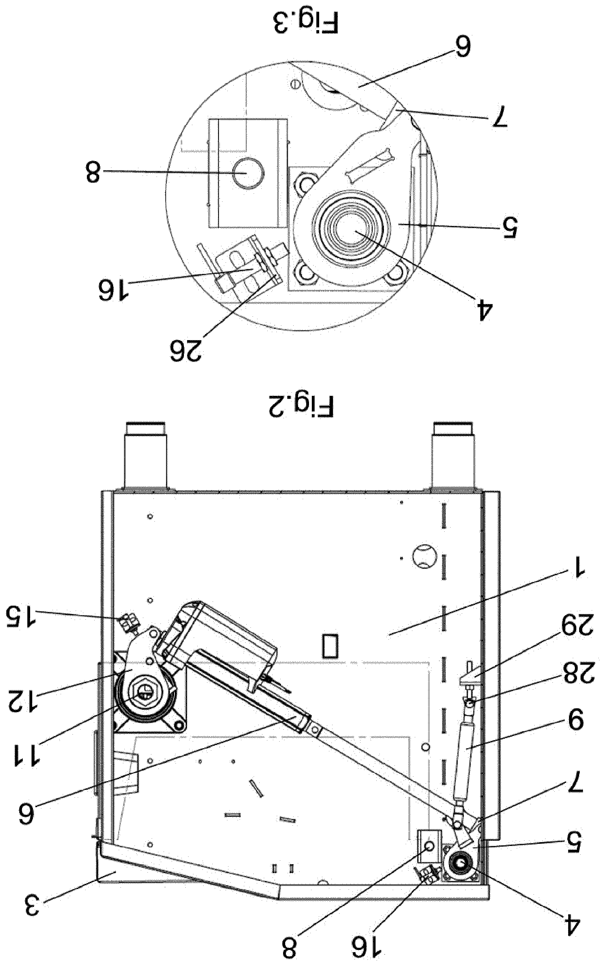

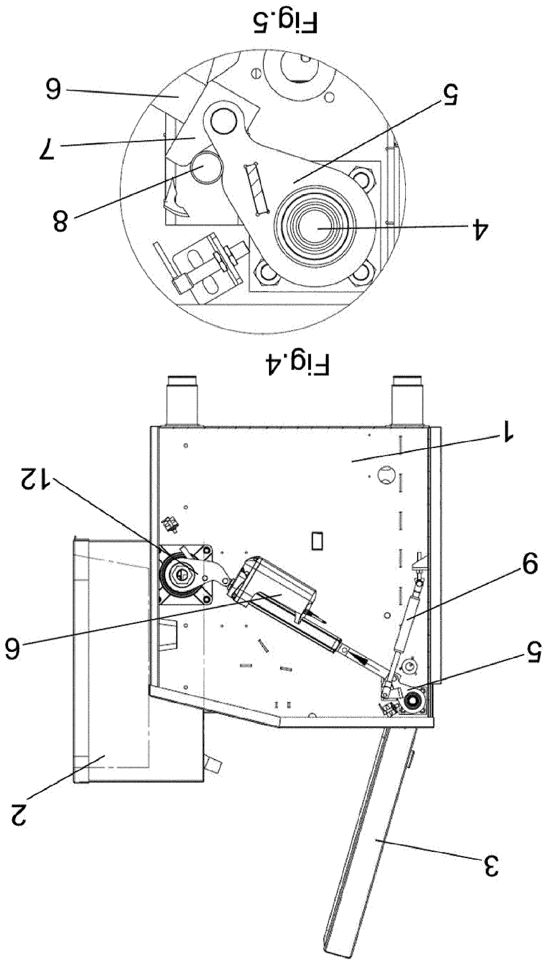

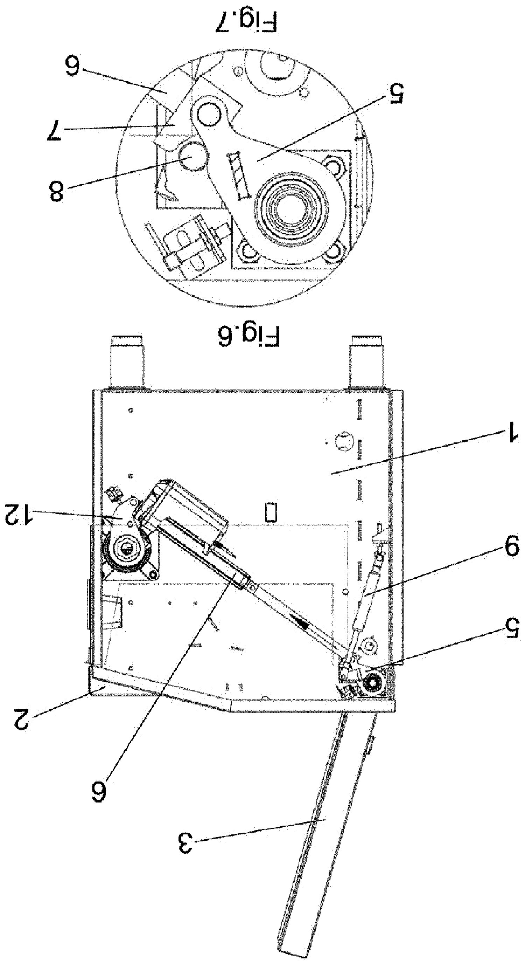

The equipment for thermal food preparation two drive mechanisms (Fig. 1, Fig. 2, Fig. 3, Fig. 4, Fig. 5, Fig. 6, Fig. 7), which comprise a drive 6 simultaneously connected to one of the cooking vessels 2 and with one of the lids 3.

The lid 3 is always mounted on the first shaft 4, on which is simultaneously mounted the lever 5 of the lid 3, which is further connected to the drive 6, and the cooking vessel 2 is always mounted on the second shaft 11, on which is simultaneously mounted the lever 12 of the cooking vessel 2 which is also connected to said drive 6.

On the lever 5 of the lid 3 is mounted a lock 7 of the position of the lid 3, into which the lock pin 8 engages in its extreme position. The lock 7 of the position of the lid 3 is mounted in the connection of the lever 5 of the lid 3 and the drive 6. The lock pin 8 is mounted in the supporting frame 1.

On the lever 5 of the lid 3 is simultaneously mounted the first pushing means 9, which holds the lid 3 in the open position. The first pushing means 9 is simultaneously rotatably and adjustably mounted in the supporting frame 1. The first pushing means 9 is a gas strut.

The drive 6 is at one end mounted on the pin 13 of the lever 5 of the lid 3 and the other end is mounted on the pin 14 of the lever 12 of the cooking vessel 2. The drive 6 is a linear drive which is a linear motor.

The equipment for thermal food preparation further comprises a sensor 16 of the position of the lever 5 of the lid 3, which is adjustably mounted in a holder 26 attached to the supporting frame 1, and a sensor 15 of the position of the lever 12 of the cooking vessel 2 which is again adjustably mounted in the holder and fastened through it to the supporting frame 1.

### Example 2

The equipment for thermal food preparation (Fig. 14) comprises a supporting frame 1, in which are pivotally mounted two cooking vessels 2, and in the supporting frame 1 are a further pivotally mounted two lids 3 to be tilted onto the cooking vessels 2.

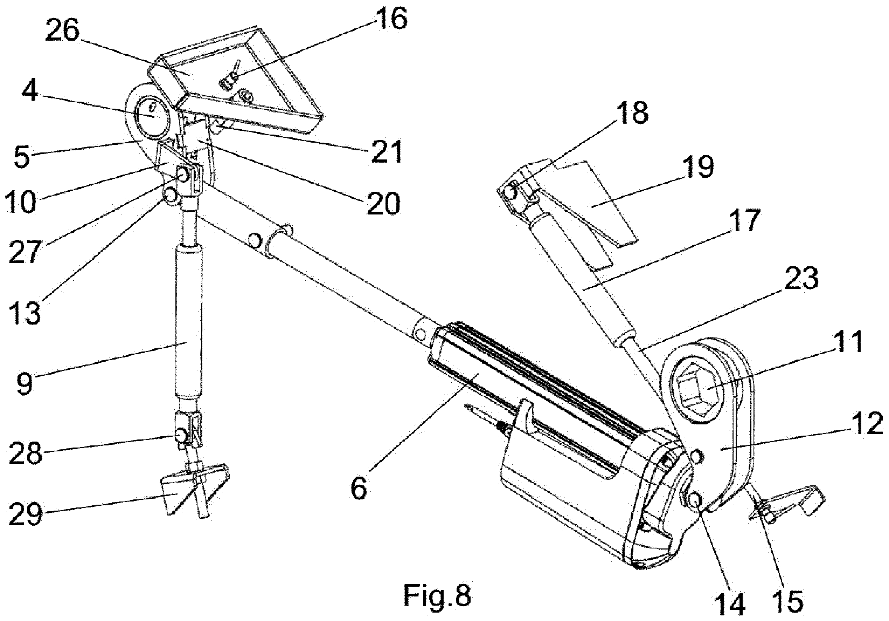

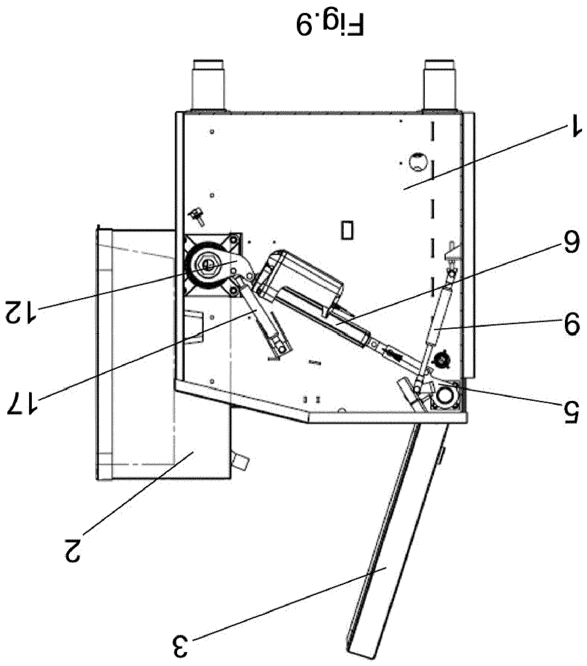

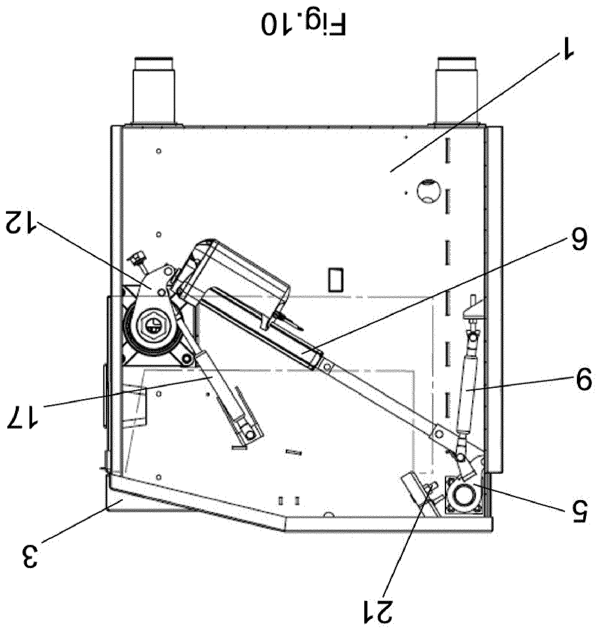

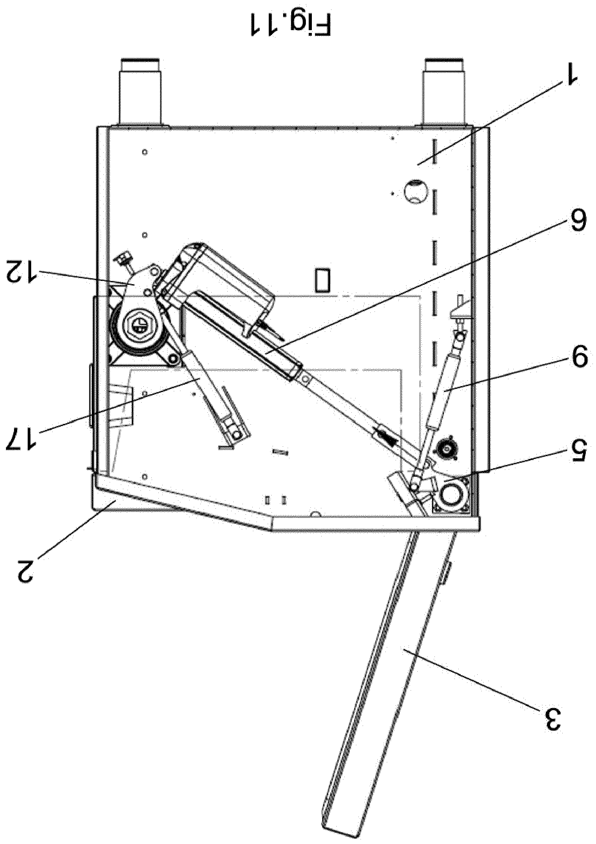

The equipment for thermal food preparation two drive mechanisms (Fig. 8, Fig. 9, Fig. 10, Fig. 11, Fig. 12) which comprise a drive 6 simultaneously connected to one of the cooking vessels 2 and one of the lids 3.

The lid 3 is always mounted on the first shaft 4, on which is simultaneously mounted the lever 5 of the lid 3, which is further connected to the drive 6, the cooking vessel 2 is always mounted on the second shaft 11, on which is simultaneously mounted the lever 12 of the cooking vessel 2 which is further also connected to said drive 6.

On the lever 5 of the lid 3 is simultaneously mounted the first pushing means 9, which holds the lid 3 in the open position. The first pushing means 9 is simultaneously rotatably and adjustably mounted in the supporting frame 1. The first pushing means 9 is a gas strut.

The drive 6 is at one end mounted on the pin 13 of the lever 5 of the lid 3 and the other end is mounted on the pin 14 of the lever 12 of the cooking vessel 2. The drive 6 is a linear drive which is a linear motor.

The equipment for thermal food preparation further comprises a sensor 16 of the position of the lever 5 of the lid 3, which is adjustably mounted in a holder 26 attached to the supporting frame 1, and a sensor 15 of the position of the lever 12 of the cooking vessel 2 which is again adjustably mounted in the holder and fastened through it to the supporting frame 1.

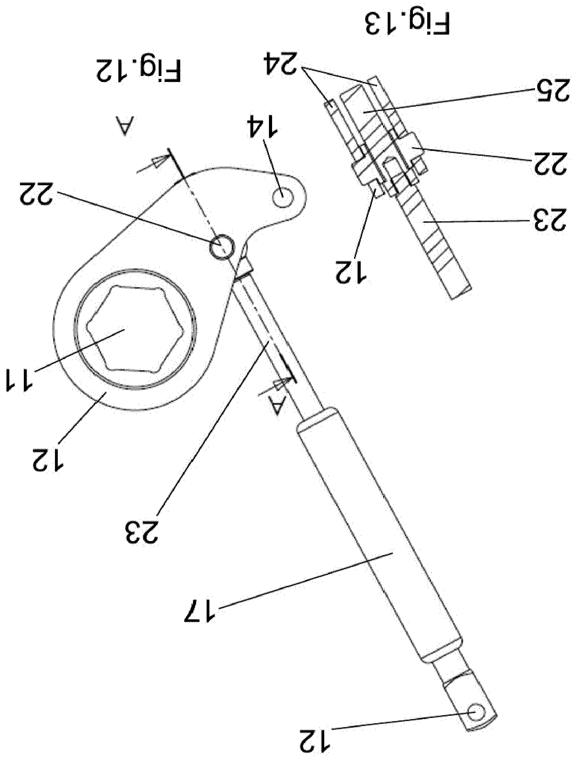

On the lever 12 of the cooking vessel 2 (Fig.12) is mounted a second pushing means 17 which is simultaneously mounted on the support frame 1. The second pushing means 17 is simultaneously mounted on the pin 22 of the lever 12 of the cooking vessel 2 and on the pin 18 mounted in the supporting frame 1. The pin 22 (Fig.13) is mounted in the sidewalls 24 of the lever 12. The pin 22 of the cooking vessel 2 is simultaneously rotatably mounted with an adjusting rod 25, which leans with its mounting against the front of the pin 22. The pin 18 is mounted in the holder 19 attached to the supporting frame 1.

The second pushing means 17 is with the cylindrical part 23 threaded in the adjusting rod 25, which is simultaneously rotatably mounted in the pin 22 of the lever 12 of the cooking vessel 2.

The second pushing means 17 is a gas strut which ensures that when the cooking vessel 2 begins to return to its operating position, the lid 3 remains open. When opening the cooking vessel 2, the second pushing means 17 is compressed, thus creating a force which counteracts the movement of the drive 6. Without the second pushing means 17, due to its smaller mass the lid 3 would start to close first and could collide with the cooking vessel 2.

The lever 5 of the lid 3 is simultaneously provided with a stop plate 20 against which in its extreme position leans a stop 21, which is adjustably fixed by means of a holder 26 to the supporting frame 1.

### Industrial application

The equipment for the thermal preparation of food, according to the invention, can be used for the thermal preparation of food at large-scale catering concerns.

### List of Reference Marks

- 1: supporting frame
- 2: cooking vessel
- 3: lid
- 4: first shaft
- 5: lever of the lid
- 6: drive
- 7: lid position lock
- 8: pin of the lock
- 9: the first pushing means
- 10: holder I
- 11: the second shaft
- 12: lever of the cooking vessel
- 13: pin of the lid lever
- 14: pin of the cooking vessel lever
- 15: sensor of the position of the lever of the cooking vessel
- 16: sensor of the position of the lever of the lid
- 17: the second pushing means
- 18: pin I
- 19: holder II
- 20: stop plate
- 21: stop
- 22: pin II
- 23: cylindrical part
- 24: sidewalls
- 25: adjusting rod
- 26: holder III
- 27: pin III
- 28: pin IV
- 29: holder IV

## Claims

1. A equipment for thermal food preparation comprising the supporting frame (1) in which is pivotally mounted at least one cooking vessel (2), and in the supporting frame (1) is further pivotally mounted at least one lid (3) to be tilted onto the cooking vessels (2), **characterised by that** it comprises a drive (6) simultaneously connected to the cooking vessel (2) and the lid (3).

2. The equipment for thermal food preparation according to claim 1, **characterised by that** the lid (3) is mounted on the first shaft (4) on which is simultaneously mounted the lever (5) of the lid (3), which is further connected to the drive (6), and the cooking vessel (2) is mounted on a second shaft (11) on which is simultaneously mounted the lever (12) of the cooking vessel (2), which is also further connected to said drive (6).

3. The equipment for thermal food preparation according to claim 2, **characterised by that** on the lever (5) of the lid (3) is mounted a lock (7) for the position of the lid (3) into which engages the pin (8) of the lock.

4. The equipment for thermal food preparation according to claim 3, **characterised by that** the lock (7) for the position of the lid (3) is mounted at the connection of the lever (5) of the lid (3) and the drive (6).

5. The equipment for thermal food preparation according to any one of claims 3 and 4, **characterised by that** the pin (8) of the lock is mounted in the supporting frame (1).

6. The equipment for thermal food preparation according to claim 2, **characterised by that** on the lever (12) of the cooking vessel (2) is mounted a second pushing means (17), which is simultaneously mounted on the supporting frame (1).

7. The equipment for thermal food preparation according to claim 6, **characterised by that** the second pushing means (17) is simultaneously mounted on the pin (22) of the lever (12) of the cooking vessel (2) and on the pin (18) mounted in the supporting frame (1).

8. The equipment for thermal food preparation according to claim 7, **characterised by that** the second pushing means (17) is with the cylindrical part (23) mounted by threading in the adjusting rod (25), which is simultaneously rotatably mounted in the pin (22) of the lever (12) of the cooking vessel (2).

9. The equipment for thermal food preparation according to any one of claims 6 to 8, **characterised by that** the lever (5) of the lid (3) is provided with a stop plate (20) against which in the extreme position, a stop (21) is engaged, which is adjustably fixed to the supporting frame (1).

10. The equipment for thermal food preparation according to any one of claims 2 to 9, **characterised by that** on the lever (5) of the lid (3) is simultaneously mounted the first pushing means (9).

11. The equipment for thermal food preparation according to claim 6, **characterised by that** the first pushing means (9) is simultaneously rotatably and adjustably mounted in the supporting frame (1).

12. The equipment for thermal food preparation according to any one of the preceding claims, **characterised by that** the drive (6) is at one end mounted on the pin (13) of the lever (5) of the lid (3) and the other end is mounted on the pin (14) of the lever (12) of the cooking vessel (2).

13. The equipment for thermal food preparation according to any one of the preceding claims, **characterised by that** the drive (6) is a linear drive.

14. The equipment for thermal food preparation according to any one of the preceding claims, **characterised by that** it further comprises a sensor (16) of the position of the lever (5) of the lid (3) and a sensor (15) of the position of the lever (12) of the cooking vessel (2).
